(19) Europäisches Patentamt / European Patent Office / Office européen des brevets

(11) EP 4 037 947 B1

(12) **FASCICULE DE BREVET EUROPEEN**

(45) Date de publication et mention
de la délivrance du brevet:
**29.01.2025 Bulletin 2025/05**

(21) Numéro de dépôt: **20781008.6**

(22) Date de dépôt: **29.09.2020**

(51) Classification Internationale des Brevets (IPC):
**B60W 40/114** (2012.01)    **B60W 40/109** (2012.01)
**B60W 50/00** (2006.01)    **B60W 30/12** (2020.01)
**B60W 50/04** (2006.01)    **B60W 50/02** (2012.01)

(52) Classification Coopérative des Brevets (CPC):
**B60W 40/114; B60W 30/12; B60W 40/109;
B60W 50/0098; B60W 50/04;** B60W 2050/0008;
B60W 2050/0014; B60W 2050/0033;
B60W 2050/021; B60W 2552/15; B60W 2552/30;
B60W 2710/207; B60W 2720/125; B60W 2720/14

(86) Numéro de dépôt international:
**PCT/EP2020/077176**

(87) Numéro de publication internationale:
**WO 2021/063916 (08.04.2021 Gazette 2021/14)**

(54) **DISPOSITIF DE CONTRÔLE D'UN VÉHICULE AUTOMOBILE À CONDUITE AUTONOME**

STEUERVORRICHTUNG FÜR EIN SELBSTFAHRENDES KRAFTFAHRZEUG

CONTROL DEVICE FOR A SELF-DRIVING MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **02.10.2019  FR 1910913**

(43) Date de publication de la demande:
**10.08.2022   Bulletin 2022/32**

(73) Titulaire: **Ampere SAS
92100 Boulogne-Billancourt (FR)**

(72) Inventeurs:
• **GONZALEZ BAUTISTA, David
78210 Saint Cyr l'école (FR)**
• **MAHTOUT, Imane
95200 Sarcelles (FR)**
• **MILANES, Vicente
92100 Boulogne-Billancourt (FR)**
• **NAVAS MATOS, Francisco Martin
75013 PARIS (FR)**

(74) Mandataire: **Renault Group
Renault s.a.s.
1 avenue du Golf
FR TCR AVA 055
78084 Guyancourt Cedex (FR)**

(56) Documents cités:
**JP-A- H11 160 205**

• **LI XIAOHUI ET AL: "Combining local trajectory
planning and tracking control for autonomous
ground vehicles navigating along a reference
path", 17TH INTERNATIONAL IEEE
CONFERENCE ON INTELLIGENT
TRANSPORTATION SYSTEMS (ITSC), IEEE, 8
October 2014 (2014-10-08), pages 725 - 731,
XP032685604, DOI: 10.1109/ITSC.2014.6957775**
• **KIM CHANG-IL ET AL: "Development of a full
speed range path-following system for the
autonomous vehicle", 2013 13TH
INTERNATIONAL CONFERENCE ON CONTROL,
AUTOMATION AND SYSTEMS (ICCAS 2013),
IEEE, 13 October 2015 (2015-10-13), pages 710 -
715, XP032838394, ISSN: 2093-7121, [retrieved
on 20151223], DOI: 10.1109/ICCAS.2015.7365012**

**Description**

La présente invention concerne un dispositif de contrôle d'un véhicule à conduite autonome.

Elle s'applique au domaine de la conduite automatisée de véhicule, qui implique notamment des fonctions de maintien du véhicule dans sa voie de circulation, de régulation de la vitesse, de direction du véhicule.

La conduite automatisée de véhicule a notamment pour objectifs d'améliorer la sécurité et l'efficacité des déplacements. Elle repose en particulier sur des systèmes de sécurité active, intégrant des systèmes d'aide à la conduite adaptés pour modifier le comportement dynamique du véhicule en situation critique tels que l'ESP (Electronic Stability Program), qui remplit une fonction de contrôle de la stabilité de la trajectoire d'un véhicule automobile, notamment via des actions de freinage. Par exemple, lorsqu'un véhicule automobile s'engage dans un virage à une vitesse longitudinale trop élevée, il peut être difficile de respecter la courbure de la route et le véhicule automobile peut commencer à sous-virer. Le système ESP intervient alors automatiquement pour maintenir le véhicule sur la trajectoire désirée par le conducteur. De manière générale, si le véhicule s'écarte d'une trajectoire souhaitée par le conducteur, le système ESP va envoyer des signaux de consigne de couple moteur et/ou de couple de freinage afin de corriger la trajectoire du véhicule.

Pour les systèmes de contrôle des véhicules comme le système ESP, la vitesse angulaire de lacet du véhicule est un paramètre clé à connaître pour pouvoir maintenir la stabilité latérale du véhicule.

La stabilité latérale d'un véhicule est en effet très importante pour la sécurité des passagers lors de manœuvres latérales extrêmes ou lors de manœuvres latérales dans des conditions défavorables de conduite, par exemple sur neige ou sur glace, ou en cas de perte soudaine de pression des pneus ou encore de vent latéral soudain. Les systèmes de contrôle de la stabilité du véhicule sont donc utilisés pour améliorer la stabilité latérale des véhicules dans de telles conditions défavorables. Pour ce faire, comme indiqué précédemment, la vitesse angulaire de lacet est une variable essentielle qu'un système de contrôle de la stabilité d'un véhicule doit connaître. Cette variable peut être mesurée par des capteurs dédiés embarqués sur le véhicule. Elle peut également être estimée à l'aide d'autres capteurs embarqués comme les accéléromètres latéraux et les capteurs de vitesse des roues. Le système de contrôle de la stabilité du véhicule comprend alors un observateur d'état permettant d'estimer l'information de vitesse angulaire de lacet, qui n'est pas mesurée mais qui est nécessaire à la commande. L'observateur d'état, construit sur la base d'un modèle modélisant la dynamique du véhicule, reçoit la vitesse du véhicule et l'accélération latérale pour estimer la vitesse angulaire de lacet.

Pour que les algorithmes mis en œuvre dans les systèmes de contrôle de la stabilité du véhicule fonctionnent correctement, il est nécessaire que les données qu'ils reçoivent en entrée soient correctes afin notamment d'éviter tout dysfonctionnements et instabilité du système. Or, on a vu précédemment qu'un certain nombre de ces données, dont la vitesse angulaire de lacet, est calculé par des observateurs basés sur un modèle dynamique propre au véhicule, ce qui signifie que ces observateurs devraient toujours fonctionner correctement, c'est-à-dire que la plage opérationnelle du véhicule devrait toujours se situer dans les limites de réponse où le modèle de véhicule a été validé. Autrement dit, il est essentiel de pouvoir déterminer en permanence si le véhicule fonctionne toujours dans la plage de validation du modèle et ainsi de déterminer si le système de contrôle est toujours capable de gérer le véhicule en mode de conduite automatisée.

Les véhicules à conduite automatisée ont donc besoin d'entrées appropriées pour pouvoir contrôler correctement le véhicule, mais il est également nécessaire de pouvoir détecter les situations critiques où le comportement nominal du système de contrôle n'est plus assuré.

La demande de brevet, non encore publiée, déposée au nom de la demanderesse et qui porte le numéro de dépôt FR1909681, vise une application pour des véhicules à conduite automatisée, où le système de contrôle du véhicule est conçu pour réagir face à des situations instables, où les limites physiques du véhicule peuvent être atteintes. Un exemple typique est un virage serré où le véhicule peut entrer avec une vitesse nettement trop élevée compte tenu des limites physiques imposées par l'adhérence entre les pneumatiques et le sol dans le virage. Ce document décrit un système où le modèle de véhicule est apte à prédire les positions futures du véhicule en mode autonome sur l'ensemble du trajet situé devant lui, pour pouvoir identifier à l'avance des positions futures du véhicule correspondant à des situations de violation des limites de roulage du véhicule et prendre ainsi des décisions de façon anticipée pour prévenir ces situations.

Cependant, si ce système permet effectivement de réagir de façon anticipée pour empêcher que le véhicule se retrouve dans des situations incontrôlables, au-delà des limites de roulage du véhicule, il n'est pas conçu pour réagir en temps réel à un changement brusque et imprévisible des conditions de roulage du véhicule, susceptibles de dégrader le fonctionnement en mode de conduite automatisée du véhicule. En particulier, dans certaines situations de roulage, il peut y avoir inadéquation entre la réponse du modèle du véhicule utilisé par le système de contrôle de la stabilité latérale du véhicule et le comportement réel du véhicule, ce qui peut conduire à un état fortement instable du véhicule. De telles situations, où le véhicule risque de n'être plus capable de corriger sa trajectoire en mode de conduite automatisée, peuvent par exemple se produire en cas de modifications soudaines et imprévisibles de la nature du contact pneumatique-route (par exemple présence d'huile, de sable ou gravillons sur la route susceptibles de compromettre l'adhérence des roues), ou encore en cas d'éclatement soudain d'un pneumatique. Dans ces situations, le modèle du véhicule utilisé par le système de contrôle peut ne plus être valide, ce qui représente un danger potentiel dans la mesure où toute la logique de commande du système de contrôle de la stabilité du véhicule repose sur l'utilisation du modèle. Le document « Combining local trajectory planning and tracking control for autonomous ground vehicles navigating along a reference path » (LI XIAOHUI et al) décrit un système présentant des inconvénients similaires. JPH11160205A corrige un modèle véhicule en fonction de l'écart entre la vitesse de lacet estimée et la vitesse de lacet mesurée, la vitesse de lacet estimée dépendant à la fois de la vitesse du véhicule et de l'angle de braquage.

Aussi, il existe un besoin d'améliorer la robustesse du contrôle de la stabilité latérale d'un véhicule en mode de conduite automatisée, dans toutes les conditions de roulage, y compris dans les situations évoquées de changement soudain et imprévisibles de ces conditions de roulage.

Un autre besoin est de pouvoir détecter en temps réel les situations où la stabilité du contrôle ne peut plus être assurée, en raison d'une inadéquation entre le comportement du véhicule et la réponse du modèle de véhicule.

A cette fin, l'invention concerne un dispositif de contrôle d'un véhicule automobile à conduite autonome ou assistée, comprenant un module planificateur de trajet apte à mémoriser des informations relatives à une trajectoire planifiée, un contrôleur du mouvement longitudinal du véhicule apte à générer en sortie des signaux de commande vers des actionneurs d'accélération et de freinage et un contrôleur du mouvement latéral du véhicule apte à générer en sortie des signaux de commande vers des actionneurs de direction, de manière à ce que le véhicule suive la trajectoire planifiée dans un mode de conduite assisté ou automatisé du véhicule, la sortie dudit contrôleur latéral étant basée sur une minimisation de l'erreur entre une vitesse angulaire de lacet désirée, obtenue à partir de la courbure de la route sur la trajectoire planifiée, et la vitesse angulaire de lacet courante du véhicule, estimée à partir d'un modèle du comportement dynamique du véhicule apte à fournir en entrée dudit contrôleur latéral une estimation de la vitesse angulaire de lacet à partir de la vitesse longitudinale du véhicule mesurée et de l'angle de braquage mesuré, caractérisé en ce qu'il comprend un module de compensation de la dynamique latérale du véhicule, apte à corriger dynamiquement des paramètres du modèle en cas de décalage entre le modèle et le comportement dynamique réel du véhicule, en fonction d'une comparaison entre la valeur estimée de la vitesse angulaire de lacet et une valeur de vitesse angulaire de lacet mesurée par un capteur embarqué, de sorte que ladite estimation fournie par le modèle au contrôleur latéral est corrigée instantanément.

Avantageusement, le module de compensation est adapté à estimer un angle de braquage compensé au moyen d'un algorithme adaptatif tenant compte de la différence entre la valeur estimée de la vitesse angulaire de lacet et la valeur mesurée de vitesse angulaire de lacet, la sortie du modèle étant corrigée sur la base de l'angle de braquage compensé fourni en entrée du modèle.

Selon l'invention, le dispositif comprend un module de sécurité, relié en sortie du module de compensation de la dynamique latérale du véhicule, ledit module de sécurité étant adapté à détecter des états de dégradation de la conduite en mode automatisé sur la base d'un écart entre la sortie du modèle corrigé et le comportement dynamique réel du véhicule.

Avantageusement, le modèle corrigé est apte à fournir une estimation des forces latérales linéarisées exercées sur les roues avant et arrière du véhicule, ledit module de sécurité étant apte à recevoir lesdites forces latérales linéarisées et à comparer lesdites forces latérales linéarisées avec les forces latérales calculées à l'aide de données fournies par des capteurs embarqués sur le véhicule.

De préférence, le module de sécurité comprend un module de calcul apte à calculer les forces latérales exercées sur les roues avant et arrière à partir de valeurs d'accélération latérale du véhicule, d'angle de braquage et de vitesse angulaire de lacet, mesurées par les capteurs embarqués.

De préférence, le module de sécurité comprend un module comparateur apte à effectuer la différence entre les forces latérales linéarisées et les forces latérales calculées et à activer un mode de sécurité lorsque ladite différence dépasse un seuil prédéfini.

Avantageusement, ledit module de sécurité est apte à générer des signaux de commande de mise en sécurité du véhicule à destination des contrôleurs longitudinal et transversal, lesdits signaux de commande de mise en sécurité prévalant sur les signaux de commande en mode automatisé lorsque ledit mode de sécurité est activé.

De préférence, lesdits signaux de mise en sécurité sont adaptés à commander l'arrêt du véhicule.

Avantageusement, ledit module de sécurité est apte à générer un signal d'alerte à destination d'une interface homme-machine du véhicule lorsque ledit mode de sécurité est activé.

L'invention concerne également un véhicule automobile caractérisé en ce qu'il comprend un dispositif de contrôle tel que décrit ci-dessus.

D'autres caractéristiques et avantages de la présente invention apparaîtront plus clairement à la lecture de la description suivante donnée à titre d'exemple illustratif et non limitatif et faite en référence aux dessins annexés :

[Fig.1] est un schéma illustrant une architecture du dispositif de contrôle de l'invention ;

[Fig.2] est un graphe montrant l'évolution en fonction du temps de la vitesse angulaire de lacet, telle que mesurée par un capteur embarqué sur le véhicule et telle que calculée à l'aide du modèle du véhicule, dans des conditions de roulage correspondant à une route en pente ;

[Fig. 3] est un graphe similaire à celui de la Fig. 2, mais dans des conditions de roulage différentes, correspondant à une route glissante ;

[Fig. 4] est un schéma synoptique illustrant le fonctionnement du module de compensation de la dynamique latérale du véhicule illustré à la figure 1 ;

[Fig. 5] est un schéma synoptique illustrant le fonctionnement du module de sécurité illustré à la figure 1.

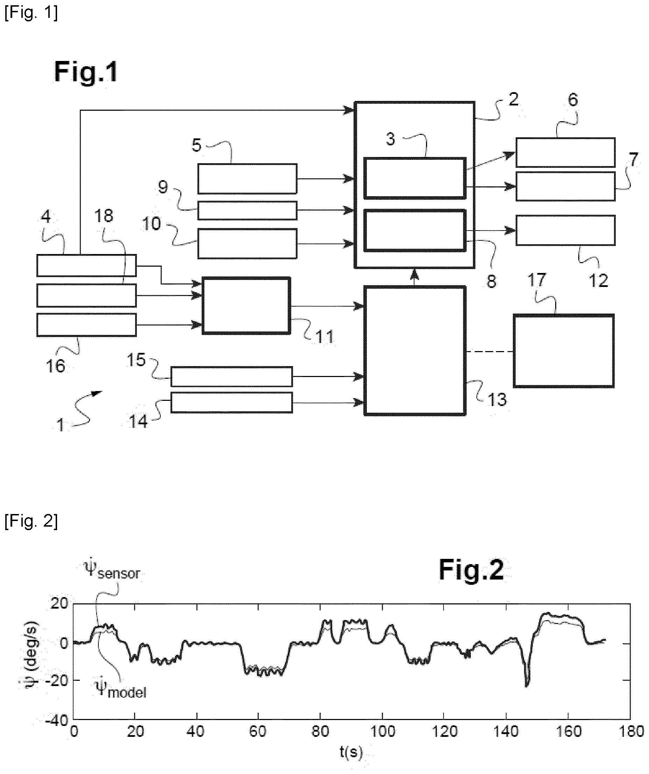

En référence à la figure 1, le dispositif 1 de contrôle du véhicule comprend un module 2 de contrôle de la conduite autonome. Ce module 2 de contrôle comporte un premier contrôleur 3, dit contrôleur longitudinal, recevant en entrée une valeur de vitesse courante du véhicule, issue d'un capteur 4 de vitesse embarqué du véhicule, et une valeur de vitesse de référence, issue d'un module planificateur de trajet 5, stockant des informations relatives à un trajet planifié pour le véhicule, incluant notamment des valeurs de vitesse de référence prévues le long du trajet planifié. Le contrôleur longitudinal 3 est adapté pour générer des signaux 6, 7 de commande de couple moteur et de freinage vers des actionneurs correspondants d'accélération et de freinage du véhicule, de façon à minimiser l'erreur de vitesse entre la valeur courante et la valeur de référence.

Le module 2 de contrôle comporte également un second contrôleur 8, dit contrôleur latéral, recevant en entrée une valeur de vitesse angulaire de lacet désirée, obtenue à partir de l'information issue du module 5 planificateur de trajet incluant la courbure de la route, une information de localisation issue d'un module 9 de localisation du véhicule et une valeur courante de vitesse angulaire de lacet du véhicule, correspondant à une valeur calculée 10 sur la base d'un modèle du comportement dynamique du véhicule apte à fournir une estimation de la vitesse angulaire de lacet et qui, conformément à l'invention, est corrigé dynamiquement par un module 11 de compensation de la dynamique latérale du véhicule, conçu pour compenser les erreurs du modèle nominal du véhicule dans certaines situations de roulage comme il sera expliqué plus en détail par la suite. A partir de ces différentes entrées, le contrôleur latéral 8 est adapté pour générer des signaux 12 de commande d'angle de braquage vers des actionneurs de direction du véhicule, agissant sur l'angle de braquage des roues directrices du véhicule, de façon à minimiser l'erreur de lacet entre la vitesse angulaire de lacet souhaité (obtenue à partir de l'information sur le tracé routier en fonction de la courbure) et la vitesse angulaire de lacet courante issue du modèle du véhicule corrigé dynamiquement.

L'action du module de compensation 11 vise à permettre de fournir au contrôleur latéral 8 une valeur correcte de la vitesse angulaire de lacet, en compensant dynamiquement le modèle du véhicule pour prendre en compte des dynamiques latérales du véhicule non modélisées dans le modèle nominal, qui sont causées par des situations inattendues modifiant soudainement les conditions de roulage du véhicule, telles que par exemple la nature du contact roues - sol et qui sont susceptibles d'amener le véhicule dans une plage de fonctionnement située hors des limites de réponse où le modèle nominal du véhicule a été validé.

Le contrôleur latéral 8 du véhicule peut ainsi être alimenté par la sortie du modèle ainsi compensé, permettant d'améliorer la robustesse de la commande fournie dans toutes les conditions de roulage, y compris dans ces conditions inattendues. Toutefois, une compensation du modèle fournissant une vitesse angulaire de lacet du véhicule qui correspond à la valeur réelle est indépendante d'une potentielle saturation des forces latérales s'exerçant sur le véhicule, ce qui peut quand même conduire à des états incontrôlés du véhicule. Autrement dit, le contrôleur latéral du véhicule peut être alimenté avec des valeurs correctes de vitesse angulaire de lacet grâce à la compensation appliqué au modèle, mais le véhicule peut néanmoins être en situation de ne plus être capable de corriger sa trajectoire en mode autonome, car les limites physiques de roulage du véhicule sont dépassées. Il est nécessaire de pouvoir détecter ces situations critiques où le contrôle nominal de la stabilité latérale du véhicule n'est plus assuré, afin de pouvoir prendre des mesures garantissant la sécurité des passagers du véhicule dans ces circonstances.

Aussi, une fois que le contrôleur latéral 8 est alimenté avec des entrées correctes, grâce à la première étape de correction de la vitesse angulaire de lacet mise en œuvre par le module de compensation 11 du modèle, une deuxième étape, mise en œuvre par un module de sécurité 13, consiste à détecter si les limites physiques de conduite du véhicule sont dépassées. Lorsque les capacités latérales maximales sont atteintes, le véhicule et le modèle utilisé pour la commande ne se comportent pas de manière égale et un décalage peut ainsi être détecté entre les forces latérales estimées par le modèle et les forces latérales calculées à l'aide des données mesurées par les capteurs embarqués du véhicule. Le module 13 de sécurité reçoit donc en entrée des valeurs d'accélération latérale du véhicule, d'angle de braquage, et de vitesse angulaire de lacet, telles que mesurées par des capteurs embarquées respectivement 14, 15, 16. Le module 13 de sécurité est également relié au module 11 de compensation. Ainsi, le module 13 de sécurité est conçu pour détecter un dépassement des limites physiques du véhicule en comparant les forces latérales linéarisées issues du modèle corrigé en sortie du module 11 de compensation, aux forces latérales calculées en utilisant les valeurs d'accélération latérale, d'angle de braquage, et de vitesse angulaire de lacet mesurées par les capteurs embarqués sur le véhicule. Une telle comparaison permet d'identifier avec précision la saturation des forces latérales. Le module 13 de sécurité est connecté en sortie à une interface homme-machine 17 du véhicule. Ainsi, si le résultat de la comparaison dépasse un seuil donné, le module 13 de sécurité commande la génération d'un signal d'alerte sonore et/ou visuelle au niveau de l'interface homme-machine 14 du véhicule. Le module 13 de sécurité est également connecté au contrôleur longitudinal 3 et au contrôleur latéral 8 du véhicule. Le module 13 de sécurité est apte à générer un signal de commande mise en sécurité à destination des contrôleurs agissant sur les actionneurs du véhicule, destiné à placer le véhicule dans un état de sécurité, par exemple en stoppant le véhicule, pour assurer la sécurité des passagers si le conducteur ne répond pas au signal d'alerte.

En résumé, le dispositif 1 de contrôle du véhicule est adapté, d'une part, via le module 11 de compensation, à fournir une estimation correcte de la vitesse angulaire de lacet et des forces latérales linéarisées à partir du modèle du véhicule, en corrigeant les inadéquations entre la réponse du modèle du véhicule et le comportement réel du véhicule et, d'autre part, via le module 13 de sécurité, à détecter des états de dégradation de la conduite en mode automatisé du véhicule, correspondant à de situations de roulage survenant soudainement, où la stabilité du contrôle ne peut plus être assuré, de sorte à appliquer une procédure de sécurité préventive permettant la mise en sécurité du véhicule, typiquement l'arrêt du véhicule, qui prévaut sur les commandes nominales de conduite en mode automatisée.

On va maintenant décrire plus en détail le fonctionnement respectif des modules de compensation 11 et de sécurité 13.

Le module 11 de compensation est adapté pour fournir d'une part, une vitesse de lacet appropriée pour le contrôleur latéral 8 et, d'autre part, les forces latérales linéarisées destinées à être comparées dans le module 13 de sécurité. L'objectif est ici de fournir des entrées correctes pour le contrôleur latéral et le module de sécurité en corrigeant la différence entre le modèle nominal et le véhicule réel.

On va utiliser le modèle bicyclette, bien connu en soi, permettant de décrire le comportement dynamique du véhicule en lacet et en dérive. Ainsi, la vitesse angulaire de lacet et la dynamique latérale du véhicule peuvent être décrites par l'équation différentielle suivante :

$$ I_z \ddot{\psi} = a F_f \cos(\delta) - b F_r + M_z $$

$$ m[a_y] = F_f \cos(\delta) + F_r + g \sin(\theta) \cos(\phi) $$

où a, b sont les distances du centre de gravité du véhicule aux axes des roues avant et arrière respectivement, m est la masse du véhicule et Iz est le moment d'inertie autour de l'axe vertical Z. $\psi$, $\theta$, $\phi$ sont, respectivement, l'angle de lacet du véhicule, l'angle d'inclinaison du véhicule et l'angle de tangage du véhicule. $M_z$, ay et $\delta$ sont, respectivement, le moment de lacet, l'accélération latérale et l'angle de braquage imposé par un actionneur dédié. Ff, Fr sont les forces latérales avant et arrière exercées sur les roues avant et arrière du véhicule grâce au contact roue/sol et permettant le virage du véhicule. Elles dépendent de l'angle de braquage $\delta$, de l'angle de glissement, ainsi que de la vitesse de déplacement du véhicule.

Toutefois, pour contrôler le mouvement latéral dans les véhicules autonomes, le modèle décrit ci-dessus doit être simplifié car la conception du contrôleur latéral et la prédiction du mouvement utilisent un modèle de véhicule linéaire et reposent uniquement sur des signaux disponibles avec des capteurs bon marché. La simplification utilisée est obtenue en supposant tout d'abord que les forces latérales exercées sur les roues avant et arrière sont proportionnelles à l'angle de glissement latéral lorsque le véhicule est utilisé dans la plage linéaire des forces exercées sur les roues. Par ailleurs, on suppose que le petit angle de braquage est défini tel que : $\cos(\delta)=1$ et $\sin(\delta)=\delta$.

Soit $\beta$ l'angle entre le vecteur de vitesse totale du véhicule mesuré autour du centre de gravité du véhicule et la direction longitudinale du véhicule. On a :

$$ \tan(\beta) = \frac{V_y}{V_x} \text{ , soit } \beta = \tan^{-1}\left(\frac{V_y}{V_x}\right) $$

Où Vx et Vy sont les vitesses selon les axes longitudinal et latéral du véhicule.

Comme indiqué précédemment, la vitesse angulaire de lacet du véhicule est une variable clé pour le contrôle latéral dans les véhicules autonomes. Cette variable doit donc être connue avec précision.

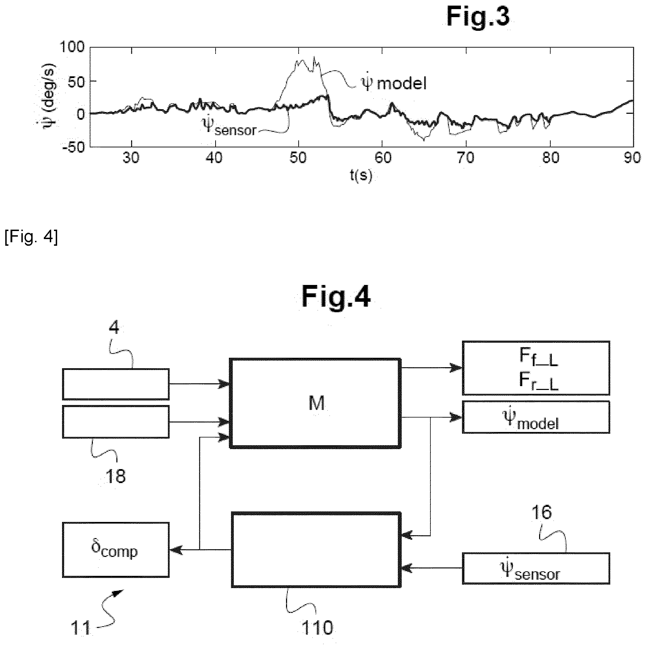

Les Figures 2 et 3 sont des graphes montrant l'évolution en fonction du temps de la vitesse angulaire de lacet, en degrés par seconde, telle que mesurée par un capteur embarqué sur le véhicule ($\dot{\Psi}_{sensor}$) et telle que calculée à l'aide du modèle décrit ci-dessus ($\dot{\Psi}_{model}$), avec l'angle de braquage mesuré $\delta$ dans deux conditions de roulage différentes, respectivement sur une route en pente (figure 2) et sur une route glissante. Le décalage illustré à la figure 2 entre les valeurs de vitesse angulaire de lacet mesurée et calculée est dû au fait que le modèle utilisé ne tient pas compte de l'effet de la pente ou des angles d'inclinaison. Sur la figure 3, où les données ont été acquises sur une route plate mais glissante, le décalage est causé par la saturation des forces latérales. Un tel décalage est particulièrement manifeste autour de la 45ième seconde sur la figure 3. Ces deux exemples faisant apparaître un décalage entre les valeurs mesurée et calculée de la vitesse angulaire de lacet, illustrent clairement la nécessité de compenser le modèle du véhicule pour tenir compte de toutes les situations potentielles de roulage dans les véhicules autonomes, de façon à permettre d'augmenter leur robustesse et leur sécurité de fonctionnement.

Pour compenser ce décalage, le module 11 de compensation de la dynamique latérale du véhicule est prévu pour permettre de corriger le modèle du véhicule dans ces situations particulières de roulage dans lesquelles un décalage apparaît avec le comportement réel du véhicule et de fournir ainsi au contrôleur latéral une valeur correcte de la vitesse angulaire de lacet.

La figure 4 est un schéma synoptique illustrant le fonctionnement du module de compensation 11, permettant d'obtenir une estimation précise de la vitesse angulaire de lacet en sortie du modèle M du véhicule dans toutes les conditions de roulage.

Le module de compensation 11 de la dynamique latérale du véhicule comprend compenserur la base du modèle nominal du véhicule M.

Plus précisément, le module de compensation 11 utilise en entrée la vitesse angulaire de lacet mesurée $\dot{\Psi}_{sensor}$, la vitesse de déplacement du véhicule, issue du capteur de vitesse 4 embarqué du véhicule, et l'information sur le tracé de la route (pente, inclinaison) fournie par des moyens 18 de stockage d'informations relatives au tracé de la route correspondant à la trajectoire planifiée. La vitesse angulaire de lacet $\dot{\Psi}_{model}$ est dans un premier temps calculée à l'aide du modèle M sur la base des données de vitesse longitudinale du véhicule et d'angle de braquage mesuré, par exemple par un capteur d'angle de braquage des roues, en tenant compte préférentiellement des informations de pente et d'inclinaison de la route.

Pour ce faire, les paramètres du modèle M du véhicule comprennent la raideur latérale des roues avants Cf, la raideur latérale des roues arrières Cr, la distance longitudinale du centre de gravité du véhicule aux roues avant a, la distance longitudinale du centre de gravité du véhicule aux roues arrière b, la masse du véhicule et le moment d'inertie de lacet du véhicule Iz.

Puis, le compensateur de modèle 110 prend en compte la vitesse angulaire de lacet mesurée $\dot{\Psi}_{sensor}$ et la vitesse angulaire de lacet calculée à l'aide du modèle $\dot{\Psi}_{model}$ pour fournir, sur la base d'une comparaison entre ces vitesses angulaires respectives, un angle de braquage compensé δcomp propre à minimiser le décalage entre elles. Le module 110 met en œuvre pour ce faire un algorithme paramétrique adaptatif pour obtenir la dynamique du véhicule non modélisée en calculant l'angle de braquage compensé δcomp comme suit :

$$\delta_{comp} = C(Q)\left(\dot{\psi}_{sensor} - \dot{\psi}_{model}\right)$$

où C(Q) est un contrôleur adaptatif en fonction des paramètres d'adaptation Q calculés en ligne à l'aide d'un algorithme adaptatif paramétrique (PAA).

L'angle de braquage compensé est alors fourni au modèle M du véhicule de sorte que la vitesse angulaire de lacet calculée à l'aide du modèle $\dot{\Psi}_{model}$ converge vers la vitesse angulaire de lacet mesurée $\dot{\Psi}_{sensor}$. La sortie du modèle est donc corrigée en temps réel grâce au module de compensation 11 et le contrôleur latéral 8 reçoit donc en entrée une donnée correcte de vitesse angulaire de lacet.

Une fois la vitesse angulaire de lacet compensée, on estime les forces latérales linéarisées exercées sur les roues avant et arrière du véhicule. Ces forces latérales linéarisés, respectivement avant Ff_l et arrière Fr_l, sont estimées comme suit :

$$F_{f\_l} = 2c_f\left(\delta - \left(\beta + a\frac{\psi}{v_x}\right)\right) \qquad F_{r\_l} = 2c_r\left(b\frac{\psi}{v_x} - \beta\right)$$

Le modèle M du véhicule, bouclé par le compensateur de modèle 110, permet donc d'avoir un système linéarisé.

Ces forces latérales linéarisées ainsi estimées sont fournies par le module 11 de compensation de la dynamique latérale du véhicule en entrée du module 13 de sécurité, où elles vont être comparées avec les forces latérales calculées à l'aide des capteurs embarqués du véhicule. Comme expliqué précédemment, cette comparaison a pour objet de détecter si les limites physiques de roulage du véhicule sont dépassées, en cas de décalage entre le modèle du véhicule et son comportement réel.

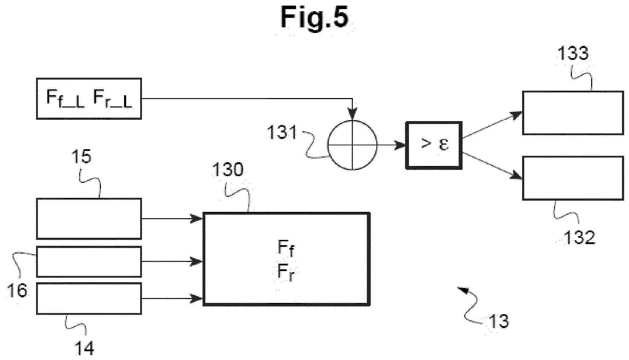

La figure 5 est un schéma synoptique illustrant le fonctionnement du module de sécurité 13, permettant de réaliser cette comparaison.

Le module de sécurité 13 comprend un module de calcul 130 apte à calculer les forces latérales exercées sur les roues avant et arrière à partir valeurs d'accélération latérale du véhicule, d'angle de braquage, et de vitesse angulaire de lacet, telles que mesurées par les capteurs embarqués, respectivement le capteur de mesure de l'accélération latérale 14, la capteur de mesure de l'angle de braquage 15 et le capteur de mesure de la vitesse angulaire de lacet 16. Ces forces latérales, respectivement avant Ff et arrière Fr, sont estimées comme suit :

$$F_f = \frac{I_z\dot{\psi} + b\,m\,a_y}{L\,\cos(\delta)} \qquad\qquad F_r = \frac{a\,m\,a_y - I_z\dot{\psi}}{L}$$

où ay correspond à l'accélération transversale mesurée.

Les forces latérales calculées par le module de calcul 130 sur la base des données capteurs et les forces latérales linéarisées estimées par le module 11 de compensation, sont fournies en entrée d'un module comparateur 131 du module de sécurité 13, apte à effectuer une comparaison entre ces forces latérales respectives, calculées et estimées.

Plus précisément, le module comparateur 131 effectue la différence entre les forces latérales linéarisées et les forces latérales calculées et compare cette différence à un seuil prédéfini ε. Lorsque cette différence est supérieure au seuil prédéfini, le module comparateur en déduit une dégradation de la conduite en mode automatisé du véhicule, à tel point que la stabilité du contrôle ne peut plus être assurée. Aussi, le dépassement du seuil prédéfini ε entraîne l'activation d'un mode de sécurité. Ce mode de sécurité comprend d'une par la génération d'un signal d'alerte 132 au niveau de l'interface homme-machine 17 du véhicule, visant à informer le conducteur de l'état incontrôlable du véhicule. Le dépassement du seuil déclenche en parallèle la génération et l'envoi de signaux de commande de mise en sécurité 133 à destination des contrôleurs agissant sur les actionneurs du véhicule, notamment les actionneurs du volant de direction et de freinage, afin d'amener le véhicule dans un état sûr, consistant à stopper le véhicule, si le conducteur ne réagit pas.

## Revendications

1. Dispositif (1) de contrôle d'un véhicule automobile à conduite autonome ou assistée, comprenant un module (5) planificateur de trajet apte à mémoriser des informations relatives à une trajectoire planifiée, un contrôleur (3) du mouvement longitudinal du véhicule apte à générer en sortie des signaux de commande (6,7) vers des actionneurs d'accélération et de freinage et un contrôleur (8) du mouvement latéral du véhicule apte à générer en sortie des signaux de commande (12) vers des actionneurs de direction, de manière à ce que le véhicule suive la trajectoire planifiée dans un mode de conduite assisté ou automatisé du véhicule, la sortie dudit contrôleur latéral (8) étant basée sur une minimisation de l'erreur entre une vitesse angulaire de lacet désirée, obtenue à partir de la courbure de la route sur la trajectoire planifiée, et la vitesse angulaire de lacet courante du véhicule, estimée à partir d'un modèle (M) du comportement dynamique du véhicule apte à fournir en entrée dudit contrôleur latéral (8) une estimation de la vitesse angulaire de lacet ($\dot{\psi}_{model}$) à partir de la vitesse longitudinale du véhicule mesurée et de l'angle de braquage mesuré, comprenant un module (11) de compensation de la dynamique latérale du véhicule, apte à corriger dynamiquement des paramètres du modèle (M) en cas de décalage entre le modèle et le comportement dynamique réel du véhicule, en fonction d'une comparaison entre la valeur estimée de la vitesse angulaire de lacet ($\dot{\psi}_{model}$) et une valeur de vitesse angulaire de lacet ($\dot{\psi}_{sensor}$) mesurée par un capteur embarqué (16), de sorte que ladite estimation fournie par le modèle au contrôleur latéral est corrigée instantanément, ledit dispositif étant **caractérisé en ce qu'**il comprend un module (13) de sécurité, relié en sortie du module (11) de compensation de la dynamique latérale du véhicule, ledit module (13) de sécurité étant adapté à détecter des états de dégradation de la conduite en mode automatisé sur la base d'un écart entre la sortie du modèle corrigé et le comportement dynamique réel du véhicule.

2. Dispositif selon la revendication 1, **caractérisé en ce que** le module de compensation (11) est adapté à estimer un angle de braquage compensé ($\delta_{comp}$) au moyen d'un algorithme adaptatif tenant compte de la différence entre la valeur estimée de la vitesse angulaire de lacet ($\dot{\psi}_{model}$) et la valeur mesurée de vitesse angulaire de lacet ($\dot{\psi}_{sensor}$), la sortie du modèle (M) étant corrigée sur la base de l'angle de braquage compensé fourni en entrée du modèle.

3. Dispositif selon la revendication 1 ou 2, **caractérisé en ce que** le modèle corrigé est apte à fournir une estimation des forces latérales linéarisées ($F_{f\_L}$, $F_{r\_L}$) exercées sur les roues avant et arrière du véhicule, ledit module (13) de sécurité étant apte à recevoir lesdites forces latérales linéarisées et à comparer lesdites forces latérales linéarisées avec les forces latérales calculées ($F_f$, $F_r$) à l'aide de données fournies par des capteurs embarqués (14, 15, 16) sur le véhicule.

4. Dispositif selon la revendication 3, **caractérisé en ce que** le module (13) de sécurité comprend un module de calcul (130) apte à calculer les forces latérales ($F_f$, $F_r$) exercées sur les roues avant et arrière à partir de valeurs d'accélération latérale du véhicule, d'angle de braquage, et de vitesse angulaire de lacet, mesurées par les capteurs embarquées.

5. Dispositif selon la revendication 3 ou 4, **caractérisé en ce que** ledit module (13) de sécurité comprend un module comparateur (131) apte à effectuer la différence entre les forces latérales linéarisées ($F_{f\_L}$, $F_{r\_L}$) et les forces latérales calculées ($F_f$, $F_r$) et à activer un mode de sécurité lorsque ladite différence dépasse un seuil prédéfini ($\varepsilon$).

6. Dispositif selon la revendication 5, **caractérisé en ce que** ledit module de sécurité (13) est apte à générer des signaux de commande de mise en sécurité du véhicule à destination des contrôleurs longitudinal et latéral, lesdits signaux de commande de mise en sécurité prévalant sur les signaux de commandes de conduite en mode automatisé lorsque ledit mode de sécurité est activé.

7. Dispositif selon la revendication 6, **caractérisé en ce que** lesdits signaux de commandes de mises en sécurité sont adaptés à commander l'arrêt du véhicule.

8. Dispositif selon l'une quelconque des revendications 5 à 7, **caractérisé en ce que** ledit module de sécurité (13) est apte à générer un signal d'alerte à destination d'une interface homme-machine (17) du véhicule lorsque ledit mode de sécurité est activé.

9. Véhicule automobile, **caractérisé en ce qu'**il comprend un dispositif de contrôle (1) selon l'une quelconque des revendications précédentes.

**Patentansprüche**

1. Steuervorrichtung (1) für ein selbstfahrendes Kraftfahrzeug oder Kraftfahrzeug mit Fahrassistenz, umfassend ein Fahrtplanungsmodul (5), das geeignet ist, Informationen bezüglich einer geplanten Trajektorie zu speichern, eine Steuereinheit (3) für die Längsbewegung des Fahrzeugs, die geeignet ist, Steuersignale (6, 7) an Beschleunigungs- und Bremsaktuatoren auszugeben, und eine Steuereinheit (8) für die seitliche Bewegung des Fahrzeugs, die geeignet ist, Steuersignale (12) an Lenkaktuatoren auszugeben, so dass das Fahrzeug in einem unterstützten oder automatisierten Fahrmodus des Fahrzeugs der geplanten Trajektorie folgt, wobei der Ausgang der Lateralsteuereinheit (8) auf einer Minimierung des Fehlers zwischen einer gewünschten Gierwinkelgeschwindigkeit, die aus der Krümmung der Route auf der geplanten Trajektorie erhalten wird, und der aktuellen Gierwinkelgeschwindigkeit des Fahrzeugs basiert, die anhand eines Modells (M) des dynamischen Verhaltens des Fahrzeugs geschätzt wird, das geeignet ist, in die Lateralsteuereinheit (8) eine Schätzung der Gierwinkelgeschwindigkeit ($\dot{\Psi}_{model}$) anhand der gemessenen Längsgeschwindigkeit des Fahrzeugs und des gemessenen Einschlagwinkels einzugeben, umfassend ein Modul (11) zur Kompensation der Seitendynamik des Fahrzeugs, das geeignet ist, Parameter des Modells (M) im Falle einer Abweichung zwischen dem Modell und dem tatsächlichen dynamischen Verhalten des Fahrzeugs in Abhängigkeit von einem Vergleich zwischen dem geschätzten Wert der Gierwinkelgeschwindigkeit ($\dot{\Psi}_{model}$) und einem von einem bordeigenen Sensor (16) gemessenen Wert der Gierwinkelgeschwindigkeit ($\dot{\Psi}_{sensor}$) dynamisch zu korrigieren, so dass die von dem Modell an die Lateralsteuereinheit gelieferte Schätzung augenblicklich korrigiert wird, wobei die Vorrichtung **dadurch gekennzeichnet ist, dass** sie ein Sicherheitsmodul (13) umfasst, das mit dem Ausgang des Moduls (11) zur Kompensation der Seitendynamik des Fahrzeugs verbunden ist, wobei das Sicherheitsmodul (13) dazu eingerichtet ist, Degradationszustände des Fahrens im automatisierten Modus auf der Basis einer Abweichung zwischen dem Ausgang des korrigierten Modells und dem tatsächlichen dynamischen Verhalten des Fahrzeugs zu erkennen.

2. Vorrichtung nach Anspruch 1, **dadurch gekennzeichnet, dass** das Kompensationsmodul (11) dazu eingerichtet ist, einen kompensierten Einschlagwinkel ($\delta_{comp}$) mittels eines adaptiven Algorithmus zu schätzen, der die Differenz zwischen dem geschätzten Wert der Gierwinkelgeschwindigkeit ($\dot{\Psi}_{model}$) und dem gemessenen Wert der Gierwinkelgeschwindigkeit ($\dot{\Psi}_{sensor}$) berücksichtigt, wobei der Ausgang des Modells (M) auf der Basis des kompensierten Einschlagwinkels korrigiert wird, der in das Modell eingegeben wird.

3. Vorrichtung nach Anspruch 1 oder 2, **dadurch gekennzeichnet, dass** das korrigierte Modell geeignet ist, eine Schätzung der linearisierten Seitenkräfte ($F_{f\_L}$, $F_{r\_L}$) zu liefern, die auf die Vorder- und Hinterräder des Fahrzeugs ausgeübt werden, wobei das Sicherheitsmodul (13) geeignet ist, die linearisierten Seitenkräfte zu empfangen und die linearisierten Seitenkräfte mit den mithilfe von Daten, die von bordeigenen Sensoren (14, 15, 16) am Fahrzeug geliefert wurden, berechneten Seitenkräften ($F_f$, $F_r$) zu vergleichen.

4. Vorrichtung nach Anspruch 3, **dadurch gekennzeichnet, dass** das Sicherheitsmodul (13) ein Berechnungsmodul (130) umfasst, das geeignet ist, die auf die Vorder- und Hinterräder ausgeübten Seitenkräfte ($F_f$, $F_r$) aus Werten der Seitenbeschleunigung des Fahrzeugs, des Einschlagwinkels und der Gierwinkelgeschwindigkeit zu berechnen, die von den bordeigenen Sensoren gemessen wurden.

5. Vorrichtung nach Anspruch 3 oder 4, **dadurch gekennzeichnet, dass** das Sicherheitsmodul (13) ein Komparatormodul (131) umfasst, das geeignet ist, die Differenz zwischen den linearisierten Seitenkräften ($F_{f\_L}$, $F_{r\_L}$) und den berechneten Seitenkräften ($F_f$, $F_r$) zu bestimmen und einen Sicherheitsmodus zu aktivieren, wenn diese Differenz einen vordefinierten Schwellenwert ($\varepsilon$) überschreitet.

6. Vorrichtung nach Anspruch 5, **dadurch gekennzeichnet, dass** das Sicherheitsmodul (13) geeignet ist, Steuersignale zur Sicherung des Fahrzeugs an die Längs- und die Lateralsteuereinheit zu erzeugen, wobei die Steuersignale zur Sicherung Vorrang vor den Fahrsteuersignalen im automatisierten Modus haben, wenn der Sicherheitsmodus aktiviert ist.

7. Vorrichtung nach Anspruch 6, **dadurch gekennzeichnet, dass** die Steuersignale zur Sicherung dazu eingerichtet sind, das Anhalten des Fahrzeugs zu steuern.

8. Vorrichtung nach einem der Ansprüche 5 bis 7, **dadurch gekennzeichnet, dass** das Sicherheitsmodul (13) geeignet ist, ein Warnsignal an eine Mensch-Maschine-Schnittstelle (17) des Fahrzeugs zu erzeugen, wenn der Sicherheitsmodus aktiviert ist.

9. Kraftfahrzeug, **dadurch gekennzeichnet, dass** es eine Steuervorrichtung (1) nach einem der vorhergehenden Ansprüche umfasst.

**Claims**

1. Control device (1) of a motor vehicle with autonomous or assisted driving, comprising a route planning module (5) capable of storing information relating to a planned trajectory, a controller (3) of the longitudinal movement of the vehicle capable of generating, as output, command signals (6, 7) to acceleration and braking actuators and a controller (8) of the lateral movement of the vehicle capable of generating, as output, command signals (12) to steering actuators, such that the vehicle follows the planned trajectory in an assisted or automated driving mode of the vehicle, the output of said lateral controller (8) being based on a minimization of the error between a desired angular yaw rate, obtained from the curvature of the road on the planned trajectory, and the current angular yaw rate of the vehicle, estimated from a model (M) of the dynamic behaviour of the vehicle capable of supplying, as input to said lateral controller (8), an estimation of the angular yaw rate ($\Psi_{model}$) based on the measured longitudinal speed of the vehicle and on the measured steering angle, comprising a module (11) for compensating the lateral dynamics of the vehicle, capable of dynamically correcting parameters of the model (M) in the event of deviation between the model and the real dynamic behaviour of the vehicle, as a function of a comparison between the estimated angular yaw rate value ($\dot{\Psi}_{model}$) and an angular yaw rate value ($\dot{\Psi}_{sensor}$) measured by an on-board sensor (16), such that said estimation supplied by the model to the lateral controller is corrected instantaneously, said device being **characterized in that** it comprises a safety module (13), linked to the output of the module (11) for compensating the lateral dynamics of the vehicle, said safety module (13) being adapted to detect impaired driving states in automated mode on the basis of a difference between the output of the corrected model and the real dynamic behaviour of the vehicle.

2. Device according to Claim 1, **characterized in that** the compensation module (11) is adapted to estimate a compensated steering angle ($\delta_{comp}$) by means of an adaptive algorithm taking into account the difference between the estimated value of the angular yaw rate ($\dot{\Psi}_{model}$) and the measured angular yaw rate value ($\dot{\Psi}_{sensor}$), the output of the model (M) being corrected on the basis of the compensated steering angle supplied as input of the model.

3. Device according to Claim 1 or 2, **characterized in that** the corrected model is capable of supplying an estimation of the linearized lateral forces ($F_{f\_L}$, $F_{r\_L}$) exerted on the front and rear wheels of the vehicle, said safety module (13) being capable of receiving said linearized lateral forces and of comparing said linearized lateral forces with the calculated lateral forces ($F_f$, $F_r$) using data supplied by sensors (14, 15, 16) on board the vehicle.

4. Device according to Claim 3, **characterized in that** the safety module (13) comprises a computation module (130) capable of calculating the lateral forces ($F_f$, $F_r$) exerted on the front and rear wheels based on values of lateral acceleration of the vehicle, of steering angle, and of angular yaw rate, measured by the on-board sensors.

5. Device according to Claim 3 or 4, **characterized in that** said safety module (13) comprises a comparator module (131) capable of establishing the difference between the linearized lateral forces ($F_{f\_L}$, $F_{r\_L}$) and the calculated lateral forces ($F_f$, $F_r$) and of activating a safety mode when said difference exceeds a predefined threshold ($\varepsilon$).

6. Device according to Claim 5, **characterized in that** said safety module (13) is capable of generating vehicle securing command signals to the longitudinal and lateral controllers, said securing command signals prevailing over the driving command signals in automated mode when said safety mode is activated.

7. Device according to Claim 6, **characterized in that** said securing command signals are adapted to command the stopping of the vehicle.

8. Device according to any one of Claims 5 to 7, **characterized in that** said safety module (13) is capable of generating an alert signal to a human-machine interface (17) of the vehicle when said safety mode is activated.

9. Motor vehicle, **characterized in that** it comprises a control device (1) according to any one of the preceding claims.

[Fig. 1]

# Fig.1

[Fig. 2]

Fig.2

## Fig.3

[Fig. 4]

## Fig.4

# Fig.5

$F_{f\_L}$ $F_{r\_L}$

131

> ε

133

132

15

130

16

14

$F_f$
$F_r$

13

**EP 4 037 947 B1**

## RÉFÉRENCES CITÉES DANS LA DESCRIPTION

**Documents brevets cités dans la description**

- FR 1909681